# EUROPEAN PATENT APPLICATION

(11) **EP 4 475 289 A2**
(43) Date of publication of application: **11.12.2024**
(21) Application number: 24179132.6
(22) Date of filing: 30.05.2024
(51) Int. Cl.: H01M 50/107, H01M 50/179, H01M 50/184, H01M 50/188, H01M 50/548, H01M 50/559, H01M 10/0525, H01M 10/04, H01M 50/152, H01M 50/593

(54) **SECONDARY BATTERY**

(30) Priority: 09.06.2023 KR 20230074062
(71) Applicant: Samsung SDI Co., Ltd., Yongin-si, Gyeonggi-do 17084 (KR)
(72) Inventor: JUNG, Hyun Ki, 17084 Yongin-si (KR); PARK, Gun Gue, 17084 Yongin-si (KR); KO, Sung Gwi, 17084 Yongin-si (KR); YU, Gwan Hyeon, 17084 Yongin-si (KR); KIM, Myung Seob, 17084 Yongin-si (KR); YOO, Yoon Sun, 17084 Yongin-si (KR); JUN, Woo Tae, 17084 Yongin-si (KR); LEE, Ho Jae, 17084 Yongin-si (KR); KIM, Mun Sung, 17084 Yongin-si (KR)
(74) Representative: Marks & Clerk LLP

(57) **Abstract**

A secondary battery includes an electrode assembly including a first electrode plate, a second electrode plate, and a separator interposed therebetween, a can accommodating the electrode assembly, and a terminal portion including a rivet terminal coupled to one side of the can in a longitudinal direction and electrically connected to the first electrode plate, and an insulator between the can and the rivet terminal to insulate the can from the rivet terminal, and having a stepped structure in an area contacting the rivet terminal. By reducing or minimizing a height difference between the positive electrode terminal and the insulator, shape deformation of the electrode assembly can be reduced or prevented during the manufacturing process. By reducing the thickness and weight of the insulator, the size of the electrode assembly can be increased, and the capacity of the secondary battery can be increased.

## Description

### BACKGROUND

### 1. Field

Embodiments of the present disclosure relate to a secondary battery having an improved terminal structure.

### 2. Description of the Related Art

In general, a cylindrical secondary battery includes a cylindrical electrode assembly, a cylindrical can that accommodates the electrode assembly with an electrolyte, and a cap assembly that seals the can. The cap assembly is electrically connected to the electrode assembly and to the exterior of the secondary battery.

In a battery module that uses a plurality of cylindrical secondary batteries by modularizing the same, bus bars are connected to the upper and lower terminals of the secondary batteries, respectively. Therefore, there are problems in that the battery module may have a complicated structure, and the process may be extended. To solve these problems, a secondary battery having a structure in which a positive electrode terminal in the form of a rivet is provided on one side of the can facing the cap assembly can be used. When applying a rivet-type terminal, an insulator is suitable for insulation from the can. To increase battery capacity and improve battery efficiency in secondary batteries of the same size, it is suitable to precisely design the shape and thickness of the rivet-type terminal and the insulator.

The above information disclosed in this BACKGROUND section is only for enhancement of understanding of the background of the present disclosure, and therefore it may contain information that does not constitute prior art.

### SUMMARY

Embodiments of the present disclosure provide a secondary battery having an improved terminal structure.

A secondary battery according to one or more embodiments of the present disclosure includes an electrode assembly including a first electrode plate, a second electrode plate, and a separator interposed between the first electrode plate and the second electrode plate, a can accommodating the electrode assembly, and a terminal portion including a rivet terminal coupled to one side of the can in a longitudinal direction and electrically connected to the first electrode plate, and an insulator between the can and the rivet terminal to insulate the can from the rivet terminal, and having a stepped structure in an area contacting the rivet terminal.

In the insulator, a height of the stepped structure may be equal to or less than a height at which the rivet terminal protrudes toward the electrode assembly.

The can may include an upper surface portion defining a terminal hole, and a side portion extending downwardly from the upper surface portion, wherein the rivet terminal is in the terminal hole, and wherein the insulator insulates the rivet terminal from the upper surface portion.

The secondary battery may further include a first electrode current collector plate between the rivet terminal and the electrode assembly, and electrically connected to the first electrode plate, and a second electrode current collector plate facing the first electrode current collector plate, and electrically connected to the second electrode plate and the side portion.

The insulator may include a first insulator insulating the upper surface portion from an outer end of the rivet terminal that is exposed to outside the upper surface portion, a second insulator insulating the terminal hole from the rivet terminal, and a third insulator insulating the first electrode current collector plate from an inner end of the rivet terminal inside the can.

The third insulator may include a terminal contact portion contacting the inner end of the rivet terminal, and a current collector plate contact portion contacting the first electrode current collector plate.

The stepped structure may include a step between the terminal contact portion and the current collector plate contact portion.

The secondary battery may further include a protrusion protruding on one of the first insulator and the rivet terminal, wherein another of the first insulator and the rivet terminal defines an accommodation groove for accommodating the protrusion.

The secondary battery may further include a cap assembly insulated from the can and coupled to the side portion.

A secondary battery according to embodiments of the present disclosure includes electrode assemblies including a first electrode plate, a second electrode plate, and a separator between the first electrode plate and the second electrode plate, a can accommodating the electrode assemblies, and including an upper surface portion defining a terminal hole, and a side portion extending downwardly from the upper surface portion, and a terminal portion including a rivet terminal in the terminal hole and electrically connected to the first electrode plate, and insulators for insulating the rivet terminal from the upper surface portion, wherein one of the insulators is inside the can, and includes a step between a surface facing the electrode assembly and a surface contacting the rivet terminal.

The secondary battery may further include a first electrode current collector plate between the electrode assemblies, and electrically connected to the first electrode plate, and a second electrode current collector plate adjacent to an end of the side portion, and electrically connected to the second electrode plate and the side portion.

The insulators may include a first insulator insulating an outer end of the rivet terminal exposed to an outside of the upper surface portion from the upper surface portion, a second insulator insulating the terminal hole from the rivet terminal, and a third insulator insulating an inner end of the rivet terminal inside the can from the first electrode current collector plate.

The third insulator may include a terminal contact portion contacting the inner end of the rivet terminal, a current collector plate contact portion contacting the first electrode current collector plate, and a first inclined portion connecting the terminal contact portion and the current collector plate contact portion.

The step may have a height between a lower surface of the terminal contact portion and a lower surface of the current collector plate contact portion.

The step may be less than or equal to a thickness from the lower surface of the terminal contact portion to a lower end of the rivet terminal.

The third insulator may further include an upper contact portion connected to an outside of the current collector plate contact portion and contacting the upper surface portion, and a second inclined portion connected between the current collector plate contact portion and the upper contact portion.

The current collector plate contact portion may define grooves.

The grooves may be concave from a surface of the collector plate contact portion in a direction toward the electrode assembly.

The secondary battery may further include a protrusion protruding on one of the first insulator and the rivet terminal, and wherein another one of the first insulator and the rivet terminal defines an accommodation groove for accommodating the protrusion.

The secondary battery may further include a cap assembly coupled to the side portion and insulated from the can, wherein the side portion includes a beading part concavely inward at an upper side of the cap assembly, and a crimping part including a lower end of the side portion bent inwardly, wherein the cap assembly is between the beading part and the crimping part.

The cap assembly may include a cap plate sealing the side portion, and a gasket between the cap plate and the side portion.

An edge of the second electrode current collector plate may be between the beading part and the gasket, and may contact the beading part.

At least some of the above and other features of the invention are set out in the claims.

### BRIEF DESCRIPTION OF DRAWINGS

FIG. 1 is a perspective view of a secondary battery according to one or more embodiments of the present disclosure.
FIG. 2 is a cross-sectional view of the secondary battery according to FIG. 1.
FIG. 3 is a partial cross-sectional view showing a terminal structure according to FIG. 2.
FIG. 4 is a partial perspective view showing the terminal structure according to FIG. 2.
FIG. 5 is a perspective view showing an insulator according to FIG. 4.
FIG. 6 is a partial cross-sectional view showing a terminal structure according to one or more other embodiments of the present disclosure.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure. The present disclosure covers all modifications, equivalents, and replacements within the idea and technical scope of the present disclosure. Further, each of the features of the various embodiments of the present disclosure may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a schematic cross-sectional view" means when a schematic cross-section taken by vertically cutting an object portion is viewed from the side. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5% of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Hereinafter, a secondary battery according to one or more embodiments of the present disclosure will be described in detail with reference to the accompanying drawings.

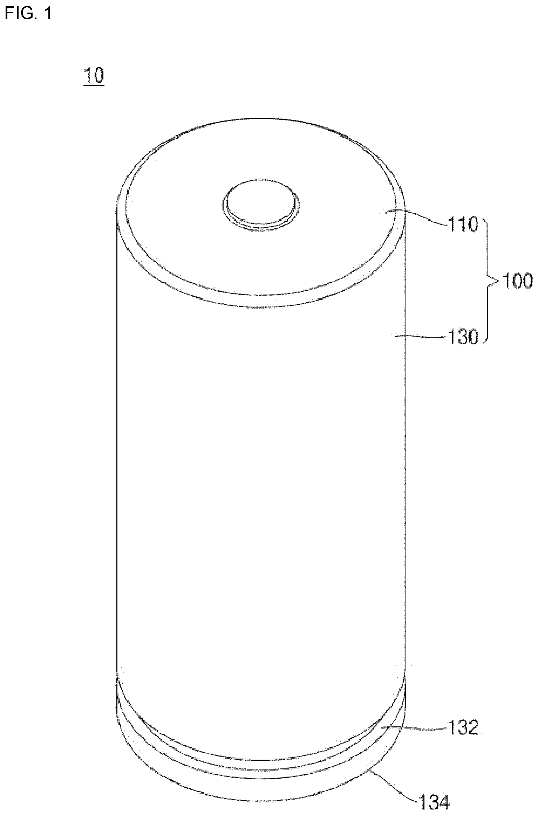

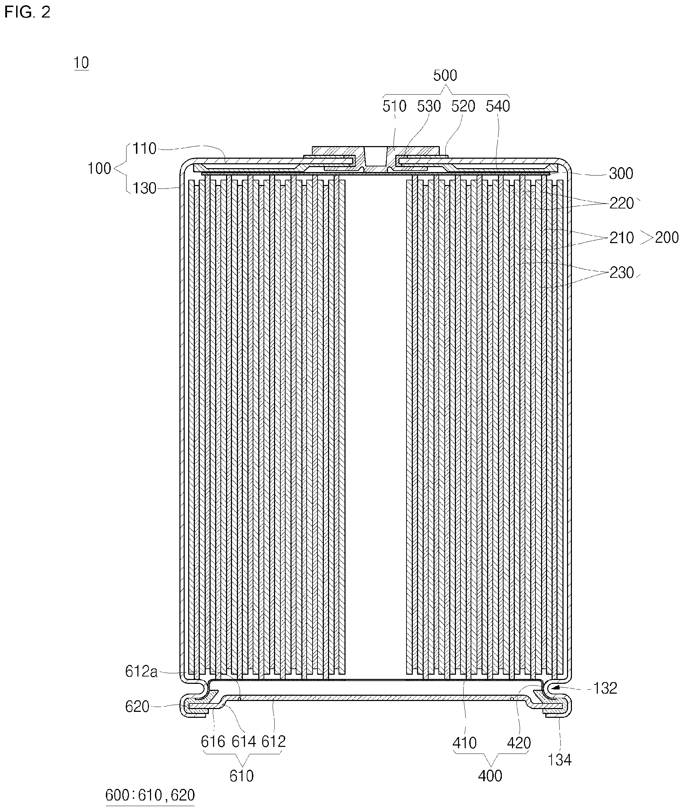

First, the basic structure of a cylindrical secondary battery will be described with reference to FIGS. 1 and 2.

FIG. 1 is a perspective view of a secondary battery according to one or more embodiments of the present disclosure. FIG. 2 is a cross-sectional view of the cylindrical secondary battery according to FIG. 1.

As shown in FIGS. 1 and 2, the secondary battery 10, which may be a cylindrical secondary battery, according to one or more embodiments of the present disclosure may include a can 100, which may be cylindrical, an electrode assembly 200 accommodated inside the can 100, a first electrode current collector plate 300, a second electrode current collector plate 400, a terminal portion 500 provided on one side of the can 100, and a cap assembly 600 provided on the other side of the can 100.

As shown in FIG. 1, the can 100 may include a upper surface portion 110, which may be circular, and a side portion 130, which may be cylindrical, extending downwardly from the upper surface portion 110. Because the lower side of the side portion 130 is open, the can 100 is shaped of a cylinder having an open lower end.

A terminal hole may be formed through the center of the upper surface portion 110. A portion of the terminal portion 500 may be exposed to the outside of the secondary battery 10 through the terminal hole.

The upper end of the side portion 130 is connected to the upper surface portion 110 and thus, the upper surface portion 110 and the side portion 130 are integrally formed. The lower end of the side portion 130 is open, and the cap assembly 600 is provided at the open end. A beading part 132 may be formed adjacent to the bottom of the side portion 130. The beading part 132 may be inwardly concavely formed from the side portion 130. The end of the side portion 130, spaced apart from the beading part 132, may be bent toward the inside of the can 100 to form a crimping part 134. By the beading part 132, the likelihood of separation of the electrode assembly 200 can be reduced or prevented. The cap assembly 600 may be located between the beading part 132 and the crimping part 134. The crimping part 134 may seal the can 100 by fixing the cap assembly 600.

The can 100 having the above-described structure may be made of steel, a steel alloy, aluminium, an aluminium alloy, or equivalents thereof, but the material is not limited thereto. The electrode assembly 200, the first electrode current collector plate 300, and the second electrode current collector plate 400 are accommodated within the can 100 together with an electrolyte.

As shown in FIG. 2, the electrode assembly 200 may be configured such that a first electrode plate 210, a second electrode plate 220, and a separator 230 interposed therebetween are wound into a cylindrical shape. In one or more embodiments, the first electrode plate 210 may be a positive electrode plate, and the second electrode plate 220 may be a negative electrode plate. The opposite is also possible in one or more embodiments.

In the first electrode plate 210, a positive electrode active material layer may be formed by coating, etc. on at least one surface of an aluminium (Al) foil. As an example, the positive electrode active material layer may be a transition metal oxide (LiCoO₂, LiNiO₂, LiMn₂O₄, etc.). A first electrode uncoated portion, at which the positive electrode active material layer is not formed, may be provided on the first electrode plate 210. A plurality of first electrode substrate tabs may be formed by cutting the first electrode uncoated portion into a corresponding shape by notching, etc. In one or more embodiments, the first electrode substrate tabs may be located toward the upper surface portion 110 of the can 100. In one or more embodiments, the first electrode substrate tabs may be electrically connected to the first electrode current collector plate 300. As an example, the first electrode substrate tabs may be bent in one direction, and then may be coupled to the first electrode current collector plate 300 by welding, which will later be described in detail.

In the second electrode plate 220, a negative electrode active material layer may be formed by coating at least one surface of a copper (Cu) or nickel (Ni) foil. As an example, the negative electrode active material layer may be graphite, carbon, etc. A second electrode uncoated portion, at which the negative electrode active material layer is not formed, may be provided in the second electrode plate 220. A plurality of second electrode substrate tabs may be formed by cutting the second electrode uncoated portion into a corresponding shape by notching, etc. In one or more embodiments, the second electrode substrate tabs may be located toward the lower side of the can 100. In one or more embodiments, the second electrode substrate tabs may protrude downwardly from the separator 230, and may be electrically connected to the second electrode current collector plate 400. Some portions of the second electrode substrate tabs may be electrically connected to the beading part 132 of the can 100. As an example, the second electrode substrate tabs may be bent in one direction, and then may be coupled to the second electrode current collector plate 400 by welding.

The separator 230 may be polyethylene (PE) or polypropylene (PP), but is not limited thereto. The separator 230 may reduce or prevent the likelihood of an electrical short between the first electrode plate 210 and the second electrode plate 220, and may only allow movement of lithium ions. The separator 230 may have a length that is sufficient to be in contact with the second electrode current collector plate 400 based on the longitudinal direction of the electrode assembly 200, which will later be described in detail.

The electrode assembly 200 having the above-described structure is electrically connected to the first electrode current collector plate 300 and the second electrode current collector plate 400, and is electrically connected to the terminal portion 500 and the can 100, respectively.

As shown in FIG. 2, the first electrode current collector plate 300 has a circular plate shape, and may be made of the same material as the first electrode plate 210. As an example, the first electrode current collector plate 300 may be made of aluminium or an aluminium alloy. The diameter of the first electrode current collector plate 300 may be less than the diameter of the can 100, which may reduce or prevent the likelihood of the first electrode current collector plate 300 being electrically connected to the can 100. The first electrode current collector plate 300 may be welded in a state in which the lower surface thereof is in contact with the first electrode substrate tab. In one or more embodiments, the first electrode current collector plate 300 and the first electrode plate 210 may be electrically connected. In one or more embodiments, the upper surface of the first electrode current collector plate 300 may be welded to the rivet terminal 510 of the terminal portion 500, which will be described later. In one or more embodiments, the first electrode current collector plate 300 and the rivet terminal 510 may be electrically connected. The first electrode plate 210 and the rivet terminal 510 may be electrically connected by the first electrode current collector plate 300, and the first electrode current collector plate 300 may become a path for current flow between the first electrode plate 210 and the rivet terminal 510.

As shown in FIG. 2, the second electrode current collector plate 400 may include a plate surface portion 410 having a circular plate shape, and a contact portion 420 extending from the plate surface portion 410. In one or more embodiments, the contact portion 420 is an edge area of the second electrode current collector plate 400. The upper surface of the plate surface portion 410 may be welded in a state of being in contact with the second electrode substrate tab. In one or more embodiments, the second electrode current collector plate 400 and the second electrode plate 220 may be electrically connected. To this end, the second electrode current collector plate 400 may be made of the same material as the second electrode plate 220. As an example, the second electrode current collector plate 400 may be made of copper. In one or more embodiments, the contact portion 420 may extend downwardly from the edge of the plate surface portion 410. The contact portion 420 may be in close contact with the inner surface of the beading part 132. To this end, the contact portion 420 may have a curve corresponding to the curve of the beading part 132. As an example, the contact portion 420 may be welded to, and electrically connected to, the beading part 132. In one or more embodiments, the second electrode current collector plate 400 is not electrically connected to the cap assembly 600.

In one or more embodiments, as shown in FIGS. 1 and 2, the terminal portion 500 may include a rivet terminal 510 and at least one insulator 520, 530, and 540 for insulating the rivet terminal 510.

The rivet terminal 510 is inserted into a terminal hole formed in the upper surface portion 110 of the can 100. The rivet terminal 510 is electrically connected to the first electrode plate 210 through the first electrode current collector plate 300. The rivet terminal 510 is a terminal coupled to the upper surface portion 110 of the can 100 by a riveting method. The rivet terminal 510 may be inserted into the terminal hole from the outside of the can 100 toward the inside. In one or more embodiments, one end of the rivet terminal 510 is located outside the can 100, and the other end is located inside the can 100. When the rivet terminal 510 is coupled, at least one of the first to third insulators 520 to 540 are inserted between the rivet terminal 510 and the upper surface portion 110 of the can 100 to insulate the can 100 and the rivet terminal 510 from each other. In a state in which the rivet terminal 510 is inserted into the terminal hole, the inner end of the rivet terminal 510 is compressed and deformed by processing, such as by pressing or spinning. In one or more embodiments, the rivet terminal 510 may be in close contact with the upper surface portion 110 of the can 100.

As an example, the insulator may include a first insulator 520, a second insulator 530, and a third insulator 540. The first insulator 520, the second insulator 530, and the third insulator 540 may be used without limitation in type as long as they are made of an insulating material.

The first insulator 520 is located between the outer end of the rivet terminal 510 and the upper surface portion 110. For example, the first insulator 520 may have a hollow circular plate shape. The diameter of the first insulator 520 may be larger than the diameter of the outer end of the rivet terminal 510.

The second insulator 530 may be shaped to surround the terminal hole formed in the upper surface portion 110. In one or more embodiments, about the terminal hole, the second insulator 530 may be shaped to surround the outer and inner surfaces of the upper surface portion 110 and the cross section where the terminal hole is formed.

The third insulator 540 is shaped of a hollow circular plate, and is located between the inner surface of the upper surface portion 110 and the inner end of the rivet terminal 510, which will later be described.

One end of the second insulator 530 may be in close contact with the inside of the hollow side of the first insulator 520. The other end of the second insulator 530 may be in close contact with the inside of the hollow side of the third insulator 540. In one or more embodiments, the first to third insulators may be formed integrally.

On the opposite side of the upper surface portion 110 where the terminal portion 500 having the above-described structure is provided, the cap assembly 600 is provided.

As shown in FIG. 2, the cap assembly 600 may include a cap plate 610 for sealing the can 100, and a gasket 620 for insulating the can 100 and the cap plate 610 from each other.

The cap plate 610 may include a planar portion 612 having a circular plate shape, an inclined surface 614 connected to the planar portion 612, and an extension surface 616 connected to the inclined surface 614. The planar portion 612 may be located approximately parallel to the second electrode current collector plate 400. The inclined surface 614 may slantingly extend downwardly from the edge of the planar portion 612. The extension surface 616 extends from the edge of the inclined surface 614, and may be parallel to the planar portion 612. The extension surface 616 may be surrounded by the gasket 620, and may be located between the beading part 132 and the crimping part 134. A notch 612a may be formed on the planar portion 612. The notch 612a may be broken if the pressure inside the secondary battery 10 exceeds a corresponding pressure. The gas inside the secondary battery 10 may be discharged if the notch 612a is broken. In one or more embodiments, the notch 612a may function as a vent.

The gasket 620 is located between the lower portion of the beading part 132 and the crimping part 134, and may cover the extension surface 616 of the cap plate 610. The gasket 620 may cover part or all of the extension surface 616. The side where the gasket 620 and the extension surface 616 are in contact may be defined as the inside, and the side where the gasket 620 is in contact with the beading part 132 may be defined as the outside. In one or more embodiments, a portion of the contact portion 420 of the second electrode current collector plate 400 may be inserted between the outer upper portion of the gasket 620 and the beading part 132. In one or more embodiments, the contact portion 420 of the second electrode current collector plate 400, and the extension surface 616 of the cap plate 610, are not brought into contact with the gasket 620. In one or more embodiments, the gasket 620 may insulate the cap plate 610 and the can 100 from each other, and may insulate the cap plate 610 and the second electrode current collector plate 400 from each other.

By the above-described configuration, the rivet terminal 510 may have a positive polarity, and the can 100 may have a negative polarity. In one or more embodiments, both the rivet terminal 510 of a positive polarity, and the upper surface portion 110 of a negative polarity, may be provided on the upper side of the can 100.

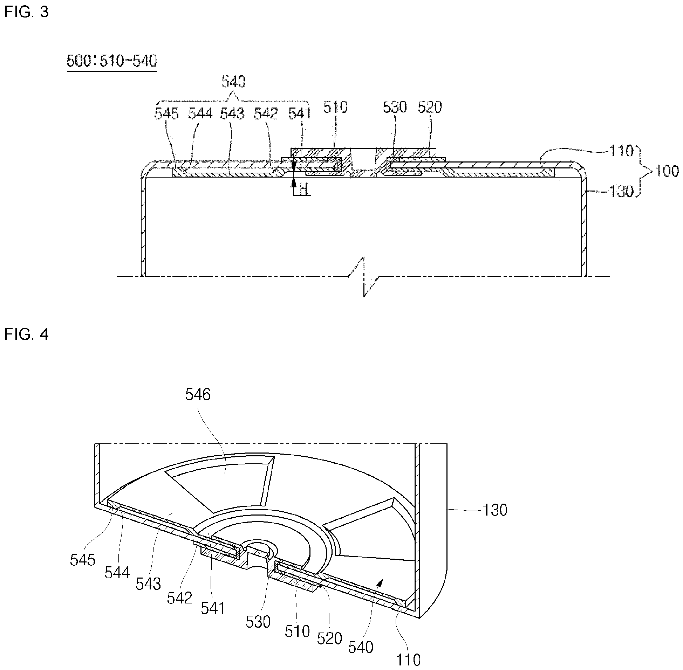

Hereafter, a terminal insulation structure of the present disclosure will be described in more detail with reference to FIGS. 3 to 5.

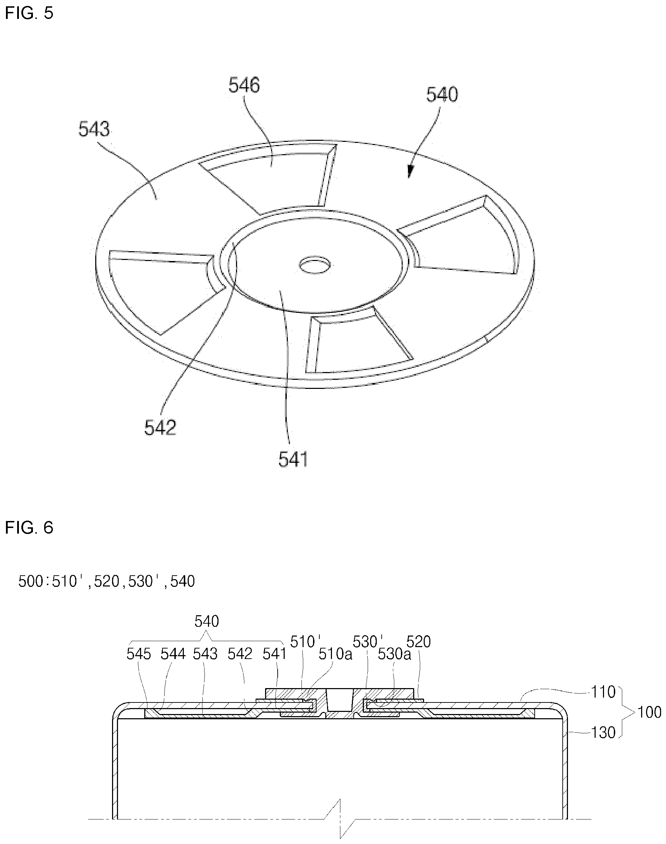

FIG. 3 is a partial cross-sectional view showing a terminal structure according to FIG. 2. FIG. 4 is a partial perspective view showing the terminal structure according to FIG. 2. FIG. 5 is a perspective view showing an insulator according to FIG. 4.

FIG. 3 shows the terminal structure in a state in which the rivet terminal 510 faces the upper side of the secondary battery 10. FIG. 4 shows the terminal structure in a state in which the rivet terminal 510 faces the lower side of the secondary battery 10. FIG. 5 shows the shape of the third insulator 540 based on the same direction as FIG. 4.

Referring to FIGS. 3 to 5, the third insulator 540 has an approximately circular plate shape, and has a thickness (e.g., a predetermined thickness). The third insulator 540 may include a terminal contact portion 541 that is in contact with the rivet terminal 510, a current collector plate contact portion 543 that is in contact with the first electrode current collector plate 300, and an upper contact portion 545 that is in contact with the upper surface portion 110. The terminal contact portion 541 and the current collector plate contact portion 543 are connected to a first inclined portion 542. The current collector plate contact portion 543 and the upper contact portion 545 are connected to a second inclined portion 544. In one or more embodiments, the terminal contact portion 541, the current collector plate contact portion 543, and the upper contact portion 545 have a step, or level difference, with respect to each other. The terminal contact portion 541, the first inclined portion 542, the current collector plate contact portion 543, the second inclined portion 544, and the upper contact portion 545 are all integrally formed. A plurality of grooves 546 are formed on the current collector plate contact portion 543 (see FIGS. 4 and 5).

One or more embodiments of the third insulator 540 will be described in more detail.

The terminal contact portion 541 is a partial area in the center of the third insulator 540 that has a circular plate shape. For example, the terminal contact portion 541 is a circular area having a diameter that is larger than the inner end diameter of the rivet terminal 510. A terminal hole into which the rivet terminal 510 is inserted is formed in the center of the terminal contact portion 541. The terminal contact portion 541 is in close contact with the inner surface of the upper surface portion 110 if viewed with reference to FIG. 3. The rivet terminal 510 is coupled in a state in which the terminal contact portion 541 is in close contact with the upper surface portion 110. The inner end of the rivet terminal 510 is deformed so that the terminal contact portion 541 can be brought into closer contact with the upper surface portion 110. The first inclined portion 542 is connected to the terminal contact portion 541.

Because the terminal contact portion 541 is circular, the first inclined portion 542 is located outside the terminal contact portion 541. On the basis of FIG. 3, the first inclined portion 542 slantingly extends downwardly from the edge of the terminal contact portion 541 toward the first electrode current collector plate 300. On the basis of FIG. 4, the first inclined portion 542 slantingly extends upwardly from the edge of the terminal contact portion 541. The current collector plate contact portion 543 is connected to the edge of the first inclined portion 542.

The current collector plate contact portion 543 is a portion that occupies most of the area of the third insulator 540. The current collector plate contact portion 543 has a circular plate shape, and a terminal contact portion 541 is formed at the center thereof. On the basis of FIG. 3, the current collector plate contact portion 543 is located on the lower side at a corresponding distance from the upper surface portion 110. On the basis of FIG. 4, the current collector plate contact portion 543 is located on the upper side at a corresponding distance from the upper surface portion 110. In one or more embodiments, the current collector plate contact portion 543 has a step from the terminal contact portion 541. In one or more embodiments, the current collector plate contact portion 543 may be parallel to the terminal contact portion 541 and the upper surface portion 110. In one or more embodiments, as shown in FIGS. 4 and 5, the grooves 546 having a substantially fan-shaped shape may be formed on the current collector plate contact portion 543. The grooves 546 may be formed concavely from the surface in the direction of the first electrode current collector plate 300. The grooves 546 are provided for reducing the weight of the third insulator 540 and may be omitted. The second inclined portion 544 is connected to the edge of the current collector plate contact portion 543.

Because the current collector plate contact portion 543 is circular, the second inclined portion 544 is located outside the current collector plate contact portion 543. On the basis of FIG. 3, the second inclined portion 544 slantingly extends upwardly from the edge of the current collector plate contact portion 543 toward the upper surface portion 110. On the basis of FIG. 4, the second inclined portion 544 extends at a downward angle from the edge of the current collector plate contact portion 543. The upper contact portion 545 is connected to the edge of the second inclined portion 544.

The upper contact portion 545 is an area corresponding to the outer edge of the third insulator 540 if viewed as a whole. On the basis of FIG. 3, the upper contact portion 545 is in contact with the inner surface of the upper surface portion 110. In one or more embodiments, the upper surface of the upper contact portion 545 may be located on the same line as the upper surface of the terminal contact portion 541. In one or more embodiments, this may mean that, if the third insulator is viewed alone, the upper surface of the upper contact portion 545 is located on the same line as the upper surface of the terminal contact portion 541. In one or more embodiments, this may mean that the upper surface of the upper contact portion 545 is located on the same line as the upper surface of the terminal contact portion 541 if the third insulator is coupled to the rivet terminal. In one or more embodiments, the upper contact portion 545 has a smaller width than the terminal contact portion 541 or the current collector plate contact portion 543. As an example, if the radial width of the current collector plate contact portion 543 is 100 (e.g., 100 arbitrary units), the radial width of the upper contact portion 545 may be 10 (e.g., 10 arbitrary units). In one or more embodiments, the edge of the third insulator 540 may be formed only with the second inclined portion 544 without the upper contact portion 545.

The above-described first and second inclined portions 542 and 544 are configurations for connecting the terminal contact portion 541, the current collector plate contact portion 543, and the upper contact portion 545 to one another while having a step with respect to one another. In one or more embodiments, the current collector plate contact portion 543 and the upper contact portion 545 may also serve to support the first electrode current collector plate 300 during the manufacturing process.

In the present disclosure, a step (H) between the terminal contact portion 541 and the current collector plate contact portion 543 is a height between the lower surface of the terminal contact portion 541 and the lower surface of the current collector plate contact portion 543, on the basis of FIG. 3.

The step between the terminal contact portion 541 and the current collector plate contact portion 543 is provided to secure an installation space for the rivet terminal 510. In one or more embodiments, the step (H) between the terminal contact portion 541 and the current collector plate contact portion 543 is effectively provided. In one or more embodiments, if the step (H) between the terminal contact portion 541 and the current collector plate contact portion 543 is too large (e.g., if the current collector plate contact portion 543 is located too far downwardly, on the basis of FIG. 3), the current collector plate contact portion 543 presses the first electrode current collector plate 300 toward the electrode assembly 200. Then, the electrode assembly 200 may be pressed, resulting in deformation. To reduce or prevent the likelihood of this, the step between the terminal contact portion 541 and the current collector plate contact portion 543 may be set to be equal to or less than the protrusion height of the rivet terminal 510. The protrusion height of the rivet terminal 510 means a thickness ranging from the lower surface of the terminal contact portion 541 to the lower end (the lowermost part, regardless of the location) of the rivet terminal 510 on the basis of FIG. 3 (i.e., the thickness of the lower inner part of the rivet terminal). Even if the step (H) between the terminal contact portion 541 and the current collector plate contact portion 543 is less than the protrusion height of the rivet terminal 510, the step (H) may suitably be not more than 0.5 mm. If the step (H) is too large, the likelihood of the rivet terminal 510 contacting the first electrode current collector plate 300 may be reduced or prevented.

In one or more embodiments, the above-described terminal structure may include a structure to reduce or prevent rotation of the rivet terminal.

FIG. 6 is a partial cross-sectional view showing a terminal structure according to one or more other embodiments of the present disclosure.

As shown in FIG. 6, a rivet terminal 510' may include a protrusion 510a at the lower portion that contacts the upper surface of the second insulator 530. As an example, the protrusion 510a may protrude in a circular shape. In one or more embodiments, a plurality of protrusions having, for example, straight, hemispherical, oval, or streamlined shapes, may be arranged at regular intervals. A second insulator 530' may include an accommodation groove 530a shaped to correspond to the above-described protrusion 510a. The protrusion 510a and the accommodation groove 530a may be engaged with each other to reduce or prevent rotation of the rivet terminal 510' along the plate surface direction of the upper surface portion 110 in a state in which the rivet terminal 510' is coupled to the upper surface portion 110 of the can 100. In one or more embodiments, the above-described protrusion 510a may be formed on the second insulator 530', and the accommodation groove 530a may be formed on the rivet terminal 510'.

By reducing or minimizing the height difference between the positive terminal and the insulator by the insulator and terminal structures, shape deformation of the electrode assembly can be reduced or prevented during the manufacturing process. In one or more embodiments, by reducing the thickness and weight of the insulator, the size of the electrode assembly can be increased and the capacity of the secondary battery can be increased.

As described above, according to one or more embodiments of the present disclosure, by reducing or minimizing the height difference between the positive electrode terminal and the insulator, shape deformation of the electrode assembly can be reduced or prevented during the manufacturing process.

In one or more embodiments, by reducing the thickness and weight of the insulator, the size of the electrode assembly can be increased, and the capacity of the secondary battery can be increased.

While the foregoing embodiments for carrying out the present disclosure are not particularly limited, it will be understood by a person skilled in the art that various changes in form and details may be made therein without departing from the scope of the present disclosure as defined by the following claims, with functional equivalents thereof to be included therein.

Embodiments are set out in the following clauses:
Clause 1. A cylindrical secondary battery comprising:
   an electrode assembly including a first electrode plate, a second electrode plate, and a separator interposed between the first electrode plate and the second electrode plate;
   a cylindrical can accommodating the electrode assembly; and
   a terminal portion including
      a rivet terminal coupled to one side in the longitudinal direction of the can and electrically connected to the first electrode plate, and at least one
      insulator interposed between the can and the rivet terminal to insulate the can and the rivet terminal from each other, wherein the insulator has a stepped structure in the area in contact with the rivet terminal.
Clause 2. The cylindrical secondary battery of clause 1, wherein in the insulator, the height of the stepped structure is equal to or smaller than the height at which the rivet terminal protrudes toward the electrode assembly.
Clause 3. The cylindrical secondary battery of clause 2, wherein the can includes a circular upper surface portion through which a terminal hole is formed, and a side portion extending downward from the upper surface portion, and the rivet terminal is inserted into the terminal hole, and
   the insulator insulates the rivet terminal and the upper surface portion from each other.
Clause 4. The cylindrical secondary battery of clause 3, further comprising:
   a first electrode current collector plate inserted between the rivet terminal and the electrode assembly and electrically connected to the first electrode plate; and
   a second electrode current collector plate disposed to face the first electrode current collector plate and electrically connected to the second electrode plate and the side portion.
Clause 5. The cylindrical secondary battery of clause 4, wherein the insulator includes
   a first insulator that insulates the upper surface portion and an outer end of the rivet terminal exposed to the outside of the upper surface portion from each other,
   a second insulator that insulates the terminal hole and the rivet terminal from each other, and
   a third insulator that insulates the first electrode current collector plate and an inner end of the rivet terminal disposed inside the can.
Clause 6. The cylindrical secondary battery of clause 5, wherein the third insulator includes a terminal contact portion in contact with the inner end of the rivet terminal, and a current collector plate contact portion in contact with the first electrode current collector plate.
Clause 7. The cylindrical secondary battery of clause 6, wherein the stepped structure is a step between the terminal contact portion and the current collector plate contact portion.
Clause 8. The cylindrical secondary battery of any one of clauses 5 to 7, wherein at least one protrusion is formed to protrude on one of the first insulator and the rivet terminal, and an accommodation groove for accommodating the protrusion is formed on the other one.
Clause 9. The cylindrical secondary battery of any one of clauses 4 to 8, further comprising a cap assembly insulated from the can while being coupled to the side portion.
Clause 10. A cylindrical secondary battery comprising:
   electrode assemblies each including a first electrode plate, a second electrode plate, and a separator interposed between the first electrode plate and the second electrode plate;
   a can including a circular upper surface portion through which a terminal hole is formed, and a side portion extending downward from the upper surface portion, and accommodating the electrode assemblies; and
   a terminal portion including a rivet terminal inserted into the terminal hole and electrically connected to the first electrode plate, and a plurality of insulators for insulating between the rivet terminal and the upper surface portion,
   wherein one of the insulators is disposed inside the can, and has a step (H) between a surface facing the electrode assembly and a surface in contact with the rivet terminal.
Clause 11. The cylindrical secondary battery of clause 10, further comprising:
   a first electrode current collector plate inserted between the electrode assemblies and electrically connected to the first electrode plate; and
   a second electrode current collector plate disposed adjacent to an end of the side portion and electrically connected to the second electrode plate and the side portion.
Clause 12. The cylindrical secondary battery of clause 11, wherein the insulator comprises:
   a first insulator that insulates the outer end of the rivet terminal exposed to the outside of the upper surface portion and the upper surface portion from each other;
   a second insulator that insulates the terminal hole and the rivet terminal from each other; and
   a third insulator that insulates the inner end of the rivet terminal disposed inside the can and the first electrode current collector plate from each other.
Clause 13. The cylindrical secondary battery of clause 12, wherein the third insulator comprises:
   a terminal contact portion that is in contact with the inner end of the rivet terminal;
   a current collector plate contact portion that is in contact with the first electrode current collector plate; and
   a first inclined portion that slantingly connects the terminal connection portion and the current collector connection portion.
Clause 14. The cylindrical secondary battery of clause 13, wherein the step (H) is a height between the lower surface of the terminal contact portion and the lower surface of the current collector plate contact portion.
Clause 15. The cylindrical secondary battery of clause 14, wherein the step (H) is less than or equal to the thickness from the lower surface of the terminal contact portion to the lower end of the rivet terminal.
Clause 16. The cylindrical secondary battery of clause 15, wherein the third insulator further comprises:
   an upper contact portion connected to the outside of the current collector plate contact portion and in contact with the upper surface portion; and
   a second inclined portion slantingly connected between the current collector plate contact portion and the upper contact portion.
Clause 17. The cylindrical secondary battery of clause 16, wherein a plurality of grooves are formed on the current collector plate contact portion.
Clause 18. The cylindrical secondary battery of clause 17, wherein the grooves are concavely formed from the surface in a direction toward the electrode assembly.
Clause 19. The cylindrical secondary battery of any one of clauses 12 to 19, wherein at least one protrusion is formed to protrude on one of the first insulator and the rivet terminal, and an accommodation groove for accommodating the protrusion is formed on the other one.
Clause 20. The cylindrical secondary battery of any one of clauses 11 to 19, further comprising a cap assembly coupled to the side portion but insulated from the can.
Clause 21. The cylindrical secondary battery of clause 20, wherein the side portion comprises:
   a beading part that is concavely formed in an upper side of the cap assembly; and
   a crimping part that is formed by inwardly bending a lower end of the side portion, and
   the cap assembly may be disposed between the beading part and the crimping part.
Clause 22. The cylindrical secondary battery of clause 21, wherein the cap assembly may include a cap plate that seals the side portion, and a gasket inserted between the cap plate and the side portion.
Clause 23. The cylindrical secondary battery of clause 22, wherein the edge of the second electrode current collector plate is inserted between the beading part and the gasket and is in contact with the beading part.

## Claims

1. A secondary battery comprising:
an electrode assembly comprising a first electrode plate, a second electrode plate, and a separator interposed between the first electrode plate and the second electrode plate;
a can accommodating the electrode assembly; and
a terminal portion comprising:
a rivet terminal coupled to one side of the can in a longitudinal direction and electrically connected to the first electrode plate; and
an insulator between the can and the rivet terminal to insulate the can from the rivet terminal, and having a stepped structure in an area contacting the rivet terminal.

2. The secondary battery as claimed in claim 1, wherein, in the insulator, a height of the stepped structure is equal to or less than a height at which the rivet terminal protrudes toward the electrode assembly.

3. The secondary battery as claimed in claim 2, wherein the can comprises an upper surface portion defining a terminal hole, and a side portion extending downwardly from the upper surface portion,
wherein the rivet terminal is in the terminal hole, and
wherein the insulator insulates the rivet terminal from the upper surface portion.

4. The secondary battery as claimed in claim 3, further comprising:
a first electrode current collector plate between the rivet terminal and the electrode assembly, and electrically connected to the first electrode plate; and
a second electrode current collector plate facing the first electrode current collector plate, and electrically connected to the second electrode plate and the side portion.

5. The secondary battery as claimed in claim 4, wherein the insulator comprises:
a first insulator insulating the upper surface portion from an outer end of the rivet terminal that is exposed to outside the upper surface portion;
a second insulator insulating the terminal hole from the rivet terminal; and
a third insulator insulating the first electrode current collector plate from an inner end of the rivet terminal inside the can.

6. The secondary battery as claimed in claim 5, wherein the third insulator comprises a terminal contact portion contacting the inner end of the rivet terminal, and a current collector plate contact portion contacting the first electrode current collector plate, optionally wherein the stepped structure comprises a step between the terminal contact portion and the current collector plate contact portion.

7. The secondary battery as claimed in claim 5 or claim 6, further comprising a protrusion protruding on one of the first insulator and the rivet terminal, and wherein another of the first insulator and the rivet terminal defines an accommodation groove for accommodating the protrusion.

8. A secondary battery comprising:
electrode assemblies comprising a first electrode plate, a second electrode plate, and a separator between the first electrode plate and the second electrode plate;
a can accommodating the electrode assemblies, and comprising an upper surface portion defining a terminal hole, and a side portion extending downwardly from the upper surface portion; and
a terminal portion comprising a rivet terminal in the terminal hole and electrically connected to the first electrode plate, and insulators for insulating the rivet terminal from the upper surface portion,
wherein one of the insulators is inside the can, and comprises a step between a surface facing the electrode assembly and a surface contacting the rivet terminal.

9. The secondary battery as claimed in claim 8, further comprising:
a first electrode current collector plate between the electrode assemblies, and electrically connected to the first electrode plate; and
a second electrode current collector plate adjacent to an end of the side portion, and electrically connected to the second electrode plate and the side portion.

10. The secondary battery as claimed in claim 9, wherein the insulators comprise:
a first insulator insulating an outer end of the rivet terminal exposed to an outside of the upper surface portion from the upper surface portion;
a second insulator insulating the terminal hole from the rivet terminal; and
a third insulator insulating an inner end of the rivet terminal inside the can from the first electrode current collector plate.

11. The secondary battery as claimed in claim 10, wherein the third insulator comprises:
a terminal contact portion contacting the inner end of the rivet terminal;
a current collector plate contact portion contacting the first electrode current collector plate; and
a first inclined portion connecting the terminal contact portion and the current collector plate contact portion.

12. The secondary battery as claimed in claim 11, wherein the step has a height between a lower surface of the terminal contact portion and a lower surface of the current collector plate contact portion.

13. The secondary battery as claimed in claim 12, wherein the step is less than or equal to a thickness from the lower surface of the terminal contact portion to a lower end of the rivet terminal.

14. The secondary battery as claimed in claim 13, wherein the third insulator further comprises:
an upper contact portion connected to an outside of the current collector plate contact portion and contacting the upper surface portion; and
a second inclined portion connected between the current collector plate contact portion and the upper contact portion, optionally wherein the current collector plate contact portion defines grooves.

15. The secondary battery as claimed in any one of claims 10 to 14, further comprising a protrusion protruding on one of the first insulator and the rivet terminal, and
wherein another one of the first insulator and the rivet terminal defines an accommodation groove for accommodating the protrusion.

16. The secondary battery as claimed in any one of claims 9 to 15, further comprising a cap assembly coupled to the side portion and insulated from the can,
wherein the side portion comprises:
a beading part concavely inward at an upper side of the cap assembly; and
a crimping part comprising a lower end of the side portion bent inwardly, and
wherein the cap assembly is between the beading part and the crimping part.

17. The secondary battery as claimed in claim 16, wherein the cap assembly comprises a cap plate sealing the side portion, and a gasket between the cap plate and the side portion, optionally wherein an edge of the second electrode current collector plate is between the beading part and the gasket, and contacts the beading part.
